# FASCICULE DE BREVET EUROPEEN

(11) **EP 2 443 009 B1**
(45) Date de publication et mention de la délivrance du brevet: **02.09.2015**
(21) Numéro de dépôt: 10725147.2
(22) Date de dépôt: 11.06.2010
(51) Int. Cl.: B60T 11/236, F16J 15/32

(54) **COUPELLE DE MAÎTRE-CYLINDRE ET MAÎTRE-CYLINDRE ÉQUIPÉ DE TELLES COUPELLES**
MANSCHETTE EINES HAUPTZYLINDERS, VORZUGSWEISE EINES TANDEMHAUPTZYLINDERS UND MIT SOLCHEN MANSCHETTEN VERSEHENER TANDEMHAUPTZYLINDER
CUP OF A MASTER CYLINDER, ADVANTAGEOUSLY A TANDEM MASTER CYLINDER AND TANDEM MASTER CYLINDER PROVIDED WITH SUCH CUPS

(30) Priorité: 16.06.2009 FR 0902928
(43) Date de publication de la demande: 25.04.2012
(73) Titulaire: Robert Bosch GmbH, 70442 Stuttgart (DE)
(72) Inventeur: BERNADAT, Olivier, F-94170 Le Perreux (FR); NOBLET, Marc, F-75012 Paris (FR); GATEAU, Julien, F-94250 Gentilly (FR); GAGET, François, F-60340 Saint Leu d'Esserent (FR); RODRIGUEZ, Marc, F-95280 Jouy le Moutier (FR)
(86) Numéro de dépôt international: PCT/EP2010/058231
(87) Numéro de publication internationale: WO 2010/146000

(56) Documents cités:
- EP-A- 1 889 767
- EP-A1- 1 616 768
- FR-A- 2 912 713
- US-A- 4 061 346
- US-A1- 2004 144 248
- US-A1- 2005 016 174
- US-A1- 2009 071 325

## Description

### Domaine de l'invention

La présente invention concerne une coupelle de maître-cylindre tandem, plus avantageusement un maître-cylindre, et un maître-cylindre, plus avantageusement un maître-cylindre tandem, équipé de telles coupelles, venant en contact avec son piston primaire ou son piston secondaire et soumises à la pression du liquide de frein de la chambre primaire et de la chambre secondaire,
La coupelle en forme de joint à section en U couché, étant logée dans une gorge de l'alésage du corps du maître-cylindre recevant les pistons primaire et secondaire,
la lèvre extérieure de la coupelle étant appliquée contre le fond de la gorge et sa lèvre intérieure étant appliquée par sa surface extérieure contre le piston (primaire ou secondaire),
cette surface extérieure de révolution ayant entre l'extrémité de la lèvre et le fond de la coupelle, une section formant un talon suivi d'un profil ondulé comprenant au moins deux grandes rainures et une succession de petites rainures, formant avec le piston, des cavités annulaires emprisonnant du liquide de frein.

### Etat de la technique

Il existe de telles coupelles isolatrices/séparatrices de maître-cylindre tandem soumises à la pression du liquide de frein de la chambre primaire et de la chambre secondaire, qui ont une lèvre ou un talon s'appliquant sur toute la surface périphérique contre la surface périphérique du piston primaire ou du piston secondaire du maître-cylindre. Ce talon ou lèvre est suivi de rainures, à savoir d'abord de deux grandes rainures puis d'une succession de petites rainures formant des volumes périphériques recevant du liquide et les cloisons entre les rainures s'appliquent lorsque le maître-cylindre tandem est en pression, contre la surface des pistons primaire et secondaire.

Le document EP 1616768 Al, qui est considéré comme l'état de la technique le plus proche, montre un système selon le préambule de la revendication indépendante.

### But de l'invention

La présente invention a pour but de diminuer la friction sous pression des coupelles séparatrices/isolatrices de maître-cylindre tandem pour améliorer le fonctionnement, c'est-à-dire le rendement.

### Exposé et avantages de l'invention

A cet effet, l'invention concerne une coupelle de maître-cylindre tandem du type défini ci-dessus caractérisée en ce que les deux grandes rainures sont bordées :
- d'une nervure entre le talon et la première rainure,
- d'une nervure entre la première rainure et la seconde rainure,
- d'une nervure entre la seconde rainure et les petites rainures,
ces nervures étant en saillie par rapport à la surface cylindrique du talon en position de montage de la coupelle pour écarter le talon de la surface du piston et former entre le talon et la surface du piston, un intervalle avec un film de liquide de frein.

Cette coupelle de maître-cylindre offre l'avantage de réduire de façon importante la friction sous pression entre la coupelle et le piston primaire ou secondaire contre lequel elle s'applique, grâce à la réduction importante des surfaces de contact entre la coupelle et le piston et aussi grâce à la formation d'un film de liquide de frein entre la lèvre ou talon de la coupelle et la surface du piston.

Cela permet d'améliorer considérablement le rendement du maître-cylindre tandem.

Suivant une autre caractéristique, la saillie des nervures par rapport à la surface cylindrique du talon est de l'ordre de 5/100 mm.

Suivant une autre caractéristique avantageuse, à partir du talon, les nervures et les rainures ont un profil ondulé.

L'invention concerne également un maître-cylindre tandem équipé de coupelles telles que définies ci-dessus caractérisé en ce qu'au moins les coupelles isolatrices/séparatrices ont chacune deux grandes rainures bordées :
- d'une nervure entre le talon et la première rainure,
- d'une nervure entre la première rainure et la seconde rainure,
- d'une nervure entre la seconde rainure (624) et les petites rainures.

### Dessins

La présente invention sera décrite ci-après de manière plus détaillée à l'aide d'un exemple de coupelle de maître-cylindre selon l'invention présentée schématiquement dans les dessins annexés dans lesquels :
- la figure 1 est un schéma d'un maître-cylindre tandem montrant les pistons et les coupelles,
- les figures 2A, 2B montrent très schématiquement en coupe et à échelle agrandie, respectivement la demi-section d'une coupelle dans sa gorge mais non en contact avec le piston et la coupelle dans sa gorge, en contact avec le piston,
- la figure 3 montre la section à échelle très agrandie d'une coupelle connue dont la lèvre intérieure est appliquée contre le piston,
- la figure 4 montre la forme du profil de la surface extérieure de la coupelle de la figure 3, au repos, sans contact avec le piston,
- la figure 5 est une vue en coupe analogue à celle de la figure 3 de la coupelle selon l'invention, appliquée contre la surface du piston,
- la figure 6 est une vue de la section de la coupelle selon l'invention, avant d'être appliquée contre le piston.

### Description de modes de réalisation de l'invention

A titre de remarque préliminaire et par convention, les parties coupées portent des hachures pour faciliter la lecture des dessins. Toutefois, ces hachures ne correspondent à aucun code de matière. Les coupelles selon l'invention sont réalisées en une matière souple compatible avec le liquide de frein, avantageusement un élastomère et de manière préférée en EPDM, par exemple en EPFM 15 53.

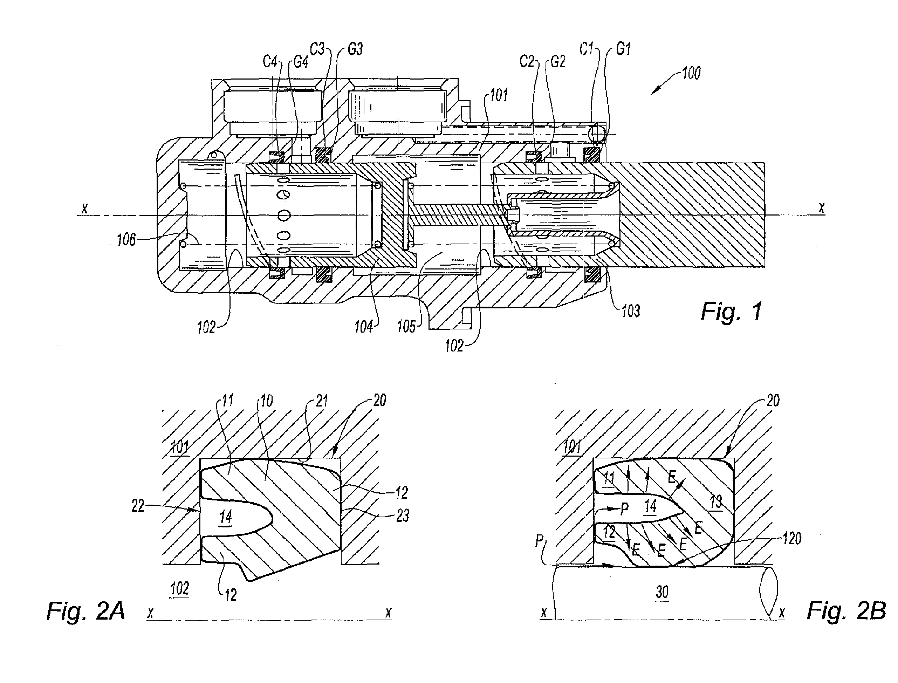

Selon la figure 1, l'invention concerne des coupelles C1-C4, c'est-à-dire des joints installés dans les gorges G1-G4 d'un maître-cylindre tandem 100 pour assurer l'étanchéité entre les différentes zones du maître-cylindre par rapport aux pistons primaire 103 et secondaire 104.

Le maître-cylindre tandem 100 se compose d'un corps 101 muni d'un alésage 102 d'axe XX dans lequel coulissent un piston primaire 103 et un piston secondaire 104. Le piston primaire 103 délimite une chambre primaire 105 dans l'alésage 102 et le piston secondaire 104. Le piston secondaire 104 délimite une chambre secondaire 106 dans l'alésage 102.

La chambre primaire 105 et la chambre secondaire 106 peuvent communiquer avec le réservoir de liquide de frein non représenté suivant la position du piston primaire 103 et du piston secondaire 104 de façon connue, de manière générale, par des conduites obturées ou fermées par le mouvement des pistons. Ces différents moyens ne seront pas décrits de manière détaillée.

L'étanchéité entre les différentes parties de l'alésage 102 telles que les chambres primaire 105 et secondaire 106 et les pistons primaire 103 et secondaire 104 est réalisée par les coupelles C1-C4 logées dans les gorges G1-G4.

Ainsi, le maître-cylindre 100 est équipé de coupelles, à savoir
- une coupelle isolatrice C1 dans la gorge G1 séparant l'entrée de l'alésage 102 du maître-cylindre 100 qui est à l'atmosphère ou à la dépression régnant dans le servofrein non représenté et la zone où débouche la conduite à la pression atmosphérique venant du réservoir de liquide de frein
- une seconde coupelle C2 dans la gorge G2 séparant la zone où débouche la conduite de liquide de frein venant du réservoir et la chambre primaire 105 ;
   les coupelles C1 et C2 coopèrent avec le piston primaire 103 ;
- une troisième coupelle C3 dans la gorge G3 entre la chambre primaire 105 et la zone où débouche la seconde conduite de liquide de frein du réservoir, à la pression atmosphérique,
- une quatrième coupelle C4 dans la gorge G4 séparant la chambre secondaire 106 et la zone où débouche la seconde conduite de liquide de frein du réservoir, à la pression atmosphérique,
les coupelles C3 et C4 coopèrent avec le piston secondaire 104.

Les coupelles C2, C3 sont exposées à la pression de la chambre primaire 105 et la coupelle C4 à la pression de la chambre secondaire 106 (par rapport à la pression atmosphérique).

Comme le montre très schématiquement la figure 2A, à une échelle très agrandie et selon une demi-coupe par rapport à l'axe XX de l'alésage 102, une coupelle 10 présente à l'état de repos, c'est-à-dire avant d'être installée dans la gorge 20 ou avant que le piston 30 (primaire ou secondaire) ne la repousse dans sa gorge 20, une structure de révolution autour de le l'axe XX engendrée par une section a une forme de U couché. Cette section en U couché a une lèvre extérieure 11 (par rapport à l'axe de révolution XX) appliquée contre le fond 21 de la gorge 20 et l'autre lèvre intérieure 12 est destinée à s'appliquer élastiquement contre la surface extérieure du piston 30. L'extrémité de chaque lèvre 11, 12 est en appui contre le côté 22 de la gorge 20 et le dos **13** est appuyé contre l'autre côté 23 de la gorge 20.

A l'état monté, lorsque le piston 30 est en place, la coupelle 10 a la forme schématiquement représentée à la figure 2B. Les lèvres 11, 12 et le dos 13 sont serrés contre le fond 21, les côtés 22, 23 de la gorge 20 et contre le piston 30.

La cavité 14 de la coupelle 10 est tournée du côté du maître-cylindre où règne la pression ou différence de pression la plus élevée. Ainsi, dans le cas de la figure 2B, la pression P de la chambre primaire ou de la chambre secondaire arrive dans la gorge 20 par l'intervalle entre l'alésage et la surface du piston pour s'appliquer à la cavité 14 de la coupelle 10 en exerçant des efforts dans le sens des flèches E tendant à plaquer le joint 12 contre la paroi de la gorge 20 et le piston 30.

Suivant l'importance de cette pression P (ou différence de pression), les lèvres 11, 12 de la coupelle 10 sont poussées et, en particulier la lèvre intérieure 12, est plaquée plus ou moins fortement contre la surface du piston 30 par sa face intérieure 120.

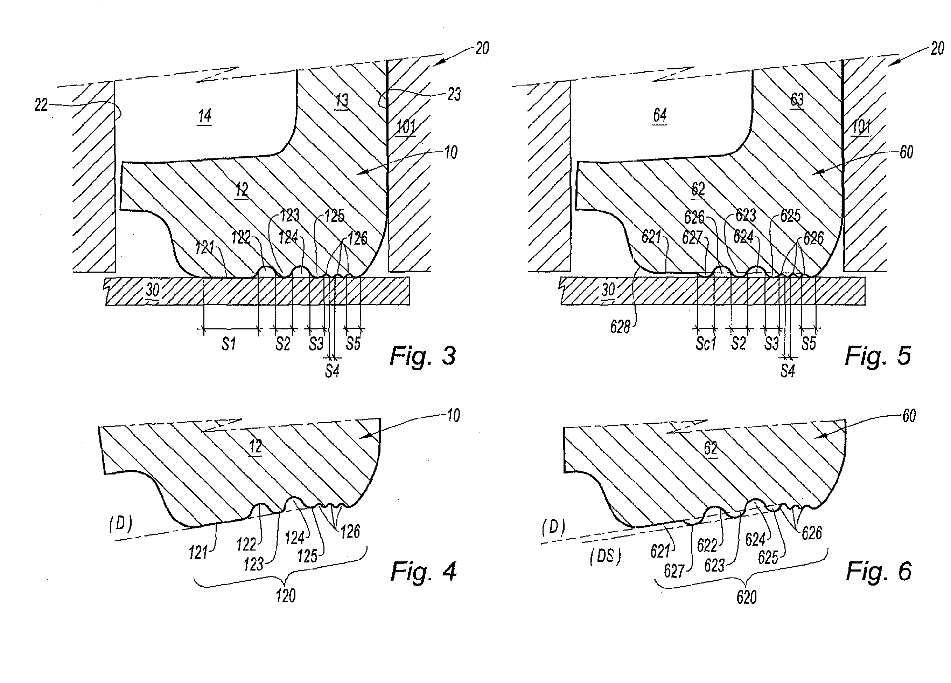

Pour mettre en évidence les caractéristiques de la coupelle 60 selon l'invention, on décrira tout d'abord et à titre de comparaison, la forme détaillée de la coupelle 10 connue, représentée à la figure 3 dans sa position active installée dans la gorge 20 et soumise à la pression P, la figure 4 montrant la forme de la coupelle lorsqu'elle n'est pas installée ou non soumise à des contraintes.

Ainsi, selon la figure 3, la lèvre intérieure 12 de la coupelle 10 connue, exposée à la pression P, présente une surface extérieure 120 de révolution appliquée contre la surface extérieure du piston 30, ayant un talon 121, suivi d'un profil ondulé composé de deux grandes rainures 122, 124 suivies d'une succession de petites rainures 126. Les deux grandes rainures 122, 124 sont séparées par une cloison 123.

La seconde grande rainure 124 est séparée des petites rainures 126 par une cloison 125. Le talon 121 est appliqué à plat contre la surface du piston 30 et les rainures 122, 124, 126 forment des cavités de révolution, recevant du liquide de frein.

La figure 3 montre les différentes surfaces de contact de la coupelle 10 avec le piston 30 :
- S1 est la surface de contact du talon 121 avec le piston 30,
- S2 est la surface de contact de la cloison 123 entre les deux grandes rainures 122, 124 et le piston 30,
- S3 est la surface de contact de la cloison de la seconde grande rainure 124 et la première petite rainure 126,
- S4 et S5 sont les surfaces de contact entre les différentes petites rainures 126.

La figure 4 montre la forme de la section de la surface extérieure 120 lorsque la coupelle n'est pas en tension, par exemple avant que la coupelle 10 ne soit installée dans la gorge 20 du maître-cylindre 100 ou avant la mise en place du piston 30. Le talon 121 correspond alors à une surface conique dont le prolongement théorique représenté par une droite (D) en trait mixte n'est dépassé ni par la cloison 123 entre les deux grandes gorges 122, 124 ni par la cloison 125 après la seconde grande gorge 124.

Par comparaison avec la section de la coupelle 10 selon l'état de la technique, la lèvre intérieure 62 de la coupelle 60, selon l'invention représentée en demi-coupe partielle à la figure 5, a un profil ondulé 620 composé d'un talon 621 suivi d'une nervure 627 puis d'une première grande rainure 622 séparée d'une seconde grande rainure 624 par une nervure 623 et ensuite une nervure 625 séparant la deuxième rainure 624 des petites rainures 626. La cavité 64 sépare la lèvre intérieure 62 de la lèvre extérieure non représentée.

Les nervures 627, 623, 625 sont en saillie par rapport à la section du talon 621 représentée par la droite (D) en trait mixte. Les sommets des nervures non mis en appui, dépassent de la droite (D) et se situent sur une droite (DS). L'écart entre les droites (D) et (DS) est par exemple de l'ordre de 5/100 mm. Cette différence, apparemment très faible, est en réalité très importante par rapport aux dimensions réelles de la coupelle et de ses rainures.

Les nervures 627, 623, 625 s'appuient sur le piston 30 en position de montage de la coupelle 60, de façon à écarter le talon 621 de la surface du piston 30 et former un intervalle 622 occupé par un film de liquide de frein 628.

A l'état neutre, non contraint, la section de la coupelle 60 a la forme représentée à la figure 6. Dans cet état, les nervures 627, 623, 625 dépassent du profil du talon 620 représenté par la droite (D).

La coupelle 60 est en appui contre le piston 30 par des surfaces de contact Sc1 S2, S3 pour les nervures 627, 623, 625 bordant les deux grandes rainures 622, 624 et par des surfaces de contact S4, S5 par les petites rainures 626. Les surfaces S2 et S3 de la figure 5 sont sensiblement identiques aux surfaces de contact S2 et S3 de la figure 3 alors que la surface de contact Sc1 est très petite, sans commune mesure avec la surface S1.

Les nervures 627, 623, 625 ont ainsi une double fonction : celle de réduire la surface de contact entre la coupelle 60 et le piston 30 et celle, d'ailleurs liée à la précédente fonction, qui consiste à former un film de liquide entre le talon 621 et le piston 30 grâce aussi à la situation des nervures 627, 623, 625 et à leur nombre garantissant le soulèvement du talon 621.

La comparaison entre la figure 5 et la figure 3 montre la réduction considérable des surfaces de contact, remplaçant la surface de contact S1, importante, du talon avec le piston 30 très schématiquement par la surface de contact Sc1.

En conclusion, cette réduction de la surface de contact et la présence du film de liquide améliorent les conditions de friction sous pression de la coupelle par rapport au piston primaire ou secondaire dans un maître-cylindre tandem.

L'invention concerne également un maître-cylindre tandem équipé de coupelles comme celle décrite ci-dessus et installée notamment dans les gorges G2, G3, G4 ; elles constituent les coupelles isolatrices/séparatrices, c'est-à-dire celles exposées aux plus fortes différences de pression, qui sont les différences de pression dans la chambre primaire ou secondaire et la pression atmosphérique.

### NOMENCLATURE

- 10: Coupelle connue
- 11: Lèvre extérieure
- 12: Lèvre intérieure
- 14: Cavité de la coupelle 10
- 20: Gorge
- 21: Fond de la gorge
- 22, 23: Côtés de la gorge
- 30: Piston
- 100: Maître-cylindre tandem
- 101: Corps
- 102: Alésage
- 103: Piston primaire
- 104: Piston secondaire
- 105: Chambre primaire
- 106: Chambre secondaire
- 120: Surface intérieure de la bande intérieure 12
- 121: Talon
- 122, 124: Grandes rainures
- 123, 125: Cloisons
- 126: Petites rainures
- 60: Coupelle selon l'invention
- 62: Lèvre intérieure
- 614: Cavité de la coupelle 60
- 620: Surface extérieure de la lèvre intérieure 62
- 621: Talon
- 622, 623: Grandes rainures
- 625, 627: Nervures
- 626: Petites rainures
- S1-S5 ; Sc: Surfaces de contact
- C1-C4: Coupelles
- D, DS: Droites
- P: Pression

## Revendications

1. Coupelle de maître-cylindre, avantageuse un maître-cylindre tandem venant en contact avec son piston primaire ou son piston secondaire et soumise à la pression du liquide de frein de la chambre primaire et de la chambre secondaire,
coupelle en forme de joint à section en U couché, logée dans une gorge de l'alésage du corps du maître-cylindre recevant les pistons primaire et secondaire, la lèvre extérieure de la coupelle étant appliquée contre le fond de la gorge et sa lèvre intérieure étant appliquée par sa surface extérieure contre le piston (primaire ou secondaire),
**caractérisée en ce que**
cette surface extérieure de révolution ayant entre l'extrémité de la lèvre et le fond de la coupelle, une section formant un talon suivi d'un profil ondulé comprenant au moins deux grandes rainures et une succession de petites rainures, formant avec le piston, des cavités annulaires emprisonnant du liquide de frein,
la coupelle (60) comportant
les deux grandes rainures (622, 624) qui sont bordées :
- d'une nervure (627) entre le talon (621) et la première rainure (622),
- d'une nervure (623) entre la première rainure (622) et la seconde rainure (624),
- d'une nervure (625) entre la seconde rainure (624) et les petites rainures (626),
ces nervures (627, 623, 625) étant en saillie (DS) par rapport à la surface cylindrique (D) du talon (621) en position de montage de la coupelle (50) pour écarter le talon (620) de la surface du piston (30) et former entre le talon (620) et la surface du piston (30), un intervalle (621) avec un film de liquide de frein.

2. Coupelle selon la revendication 1, **caractérisée en ce que**
la saillie des nervures (627, 623, 625) par rapport à la surface cylindrique du talon (621) est de l'ordre de 5/100 mm.

3. Coupelle selon la revendication 1, **caractérisée en ce qu'**
à partir du talon (621), les nervures (627, 623, 625) et les rainures (622, 624, 626) ont un profil ondulé.

4. Maître-cylindre comportant des coupelles isolatrices/séparatrices selon l'une quelconque des revendications 1 et 2, les coupelle venant en contact avec le piston primaire ou le piston secondaire et elles sont soumises à la pression du liquide de frein de la chambre primaire et de la chambre secondaire,
les coupelles en forme de joint à section en U couché, logées dans une gorge respective de l'alésage du corps du maître-cylindre recevant les pistons primaire et secondaire,
la lèvre extérieure de chaque coupelle étant appliquée est appliquée contre le fond de la gorge et sa lèvre intérieure étant appliquée par sa surface extérieure contre le piston (primaire ou secondaire),
**caractérisée en ce que**
cette surface extérieure de révolution ayant entre l'extrémité de la lèvre et le fond de la coupelle, une section formant un talon suivi d'un profil ondulé comprenant au moins deux grandes rainures et une succession de petites rainures, formant avec le piston, des cavités annulaires emprisonnant du liquide de frein, et au moins les coupelles isolatrices/séparatrices (60) ont chacune deux grandes rainures (622, 624) bordées :
- d'une nervure (627) entre le talon (621) et la première rainure (622),
- d'une nervure (623) entre la première rainure (622) et la seconde rainure (624),
- d'une nervure (625) entre la seconde rainure (624) et les petites rainures (626).

5. Maître-cylindre selon la revendication 4, **caractérisé en ce que** le maître-cylindre est un maître-cylindre tandem (100).

## Patentansprüche

1. Manschette eines Hauptzylinders, vorzugsweise eines Tandemhauptzylinders, die in Kontakt mit seinem Primärkolben oder seinem Sekundärkolben kommt und dem Druck der Bremsflüssigkeit von der Primärkammer und von der Sekundärkammer ausgesetzt ist,
wobei die Manschette in Form einer Dichtung mit Querschnitt wie ein liegendes U ist und in einer Nut der Bohrung des Körpers des Hauptzylinders, der den Primärkolben und Sekundärkolben aufnimmt, untergebracht ist, wobei die äußere Lippe der Manschette gegen den Boden der Nut angelegt ist und wobei ihre innere Lippe durch ihre Außenfläche gegen den Kolben (Primärkolben oder Sekundärkolben) angelegt ist,
**dadurch gekennzeichnet, dass**
diese äußere Rotationsfläche zwischen dem Ende der Lippe und dem Boden der Manschette einen Abschnitt aufweist, der einen Absatz bildet, der von einem gewellten Profil gefolgt ist, umfassend mindestens zwei große Rillen und eine Folge von kleinen Rillen, die mit dem Kolben ringförmige Hohlräume bilden, die Bremsflüssigkeit einschließen,
wobei die Manschette (60)
die zwei großen Rillen (622, 624) aufweist, die von Folgendem eingefasst sind:
- von einer Rippe (627) zwischen dem Absatz (621) und der ersten Rille (622),
- von einer Rippe (623) zwischen der ersten Rille (622) und der zweiten Rille (624),
- von einer Rippe (625) zwischen der zweiten Rille (624) und den kleinen Rillen (626),
wobei diese Rippen (627, 623, 625) in Bezug auf die zylindrische Fläche (D) des Absatzes (621) in Montageposition der Manschette in Vorsprung (DS) sind, um den Absatz (620) von der Kolbenoberfläche (30) zu entfernen und zwischen dem Absatz (620) und der Kolbenoberfläche (30) einen Abstand (621) mit einem Bremsflüssigkeitsfilm zu bilden.

2. Manschette nach Anspruch 1, **dadurch gekennzeichnet, dass**
der Vorsprung der Rippen (627, 623, 625) in Bezug auf die zylindrische Fläche des Absatzes (621) in der Größenordnung von 5/100 mm liegt.

3. Manschette nach Anspruch 1, **dadurch gekennzeichnet, dass** die Rippen (627, 623, 625) und die Rillen (622, 624, 626) ab dem Absatz (621) ein gewelltes Profil aufweisen.

4. Hauptzylinder, umfassend Isolier-/Trennmanschetten nach einem der Ansprüche 1 und 2, wobei die Manschetten in Kontakt mit dem Primärkolben oder dem Sekundärkolben kommen und dem Druck der Bremsflüssigkeit von der Primärkammer und der Sekundärkammer ausgesetzt sind,
wobei die Manschetten in Form einer Dichtung mit Querschnitt wie ein liegendes U sind und in einer jeweiligen Nut der Bohrung des Körpers des Hauptzylinders, der den Primärkolben und Sekundärkolben aufnimmt, untergebracht sind,
wobei die äußere Lippe von jeder Manschette gegen den Boden der Nut angelegt ist, und wobei ihre innere Lippe durch ihre Außenfläche gegen den Kolben (Primärkolben oder Sekundärkolben) angelegt ist,
**dadurch gekennzeichnet, dass**
diese äußere Rotationsfläche zwischen dem Ende der Lippe und dem Boden der Manschette einen Abschnitt aufweist, der einen Absatz bildet, der von einem gewellten Profil gefolgt ist, umfassend mindestens zwei große Rillen und eine Folge von kleinen Rillen, die mit dem Kolben ringförmige Hohlräume bilden, die Bremsflüssigkeit einschließen, und
mindestens die Isolier-/Trennmanschetten (60) jeweils zwei großen Rillen (622, 624) aufweisen, die von Folgendem eingefasst sind:
- von einer Rippe (627) zwischen dem Absatz (621) und der ersten Rille (622),
- von einer Rippe (623) zwischen der ersten Rille (622) und der zweiten Rille (624),
- von einer Rippe (625) zwischen der zweiten Rille (624) und den kleinen Rillen (626).

5. Hauptzylinder nach Anspruch 4, **dadurch gekennzeichnet, dass** der Hauptzylinder ein Tandemhauptzylinder (100) ist.

## Claims

1. Cup for a master cylinder, advantageously a tandem master cylinder coming into contact with its primary piston or its secondary piston and subjected to the pressure of the brake fluid of the primary chamber and of the secondary chamber, the cup being in the shape of a seal with a section like a U on its side, and housed in a groove of the bore of the body of the master cylinder receiving the primary and secondary pistons, the outer lip of the cup being pressed against the bottom of the groove and its inner lip being pressed by its outer surface against the piston (primary or secondary), **characterized in that** this outer surface of revolution has, between the end of the lip and the bottom of the cup, a section forming a heel followed by a corrugated profile comprising at least two large grooves and a succession of small grooves forming with the piston annular cavities trapping brake fluid, the cup (60) comprising the two large grooves (622, 624) which are bordered:
- by a rib (627) between the heel (621) and the first groove (622),
- by a rib (623) between the first groove (622) and the second groove (624),
- by a rib (625) between the second groove (624) and the small grooves (626),
these ribs (627, 623, 625) being in protrusion (DS) relative to the cylindrical surface (D) of the heel (621) in the mounted position of the cup (50) in order to separate the heel (620) from the surface of the piston (30) and form, between the heel (620) and the surface of the piston (30), a gap (621) with a film of brake fluid.

2. Cup according to Claim 1, **characterized in that** the protrusion of the ribs (627, 623, 625) relative to the cylindrical surface of the heel (621) is of the order of 5/100 mm.

3. Cup according to Claim 1, **characterized in that**, from the heel (621), the ribs (627, 623, 625) and the grooves (622, 624, 626) have a corrugated profile.

4. Master cylinder comprising isolating/separating cups according to either one of Claims 1 and 2, the cups coming into contact with the primary piston or the secondary piston and being subjected to the pressure of the brake fluid of the primary chamber and of the secondary chamber, the cups being in the shape of a seal with a section like a U on its side, and housed in a respective groove of the bore of the body of the master cylinder receiving the primary and secondary pistons, the outer lip of each cup being pressed against the bottom of the groove and its inner lip being pressed by its outer surface against the piston (primary or secondary), **characterized in that** this outer surface of revolution has, between the end of the lip and the bottom of the cup, a section forming a heel followed by a corrugated profile comprising at least two large grooves and a succession of small grooves forming with the piston annular cavities trapping brake fluid, and at least the isolating/separating cups (60) each have two large grooves (622, 624) bordered:
- by a rib (627) between the heel (621) and the first groove (622),
- by a rib (623) between the first groove (622) and the second groove (624),
- by a rib (625) between the second groove (624) and the small grooves (626).

5. Master cylinder according to Claim 4, **characterized in that** the master cylinder is a tandem master cylinder (100).
